# FASCICULE DE BREVET EUROPEEN

(11) **EP 1 871 579 B1**
(45) Date de publication et mention de la délivrance du brevet: **15.06.2011**
(21) Numéro de dépôt: 06743639.4
(22) Date de dépôt: 04.04.2006
(51) Int. Cl.: B27D 1/04, B32B 15/10, B64C 1/12

(54) **UTILISATION D'UN PANNEAU DECORATIF A BASE DE BOIS POUR L ' AMENAGEMENT INTERIEUR D'AEROPLANES**
VERWENDUNG VON ZIERPLATTEN AUF HOLZBASIS FÜR FLUGZEUGINNENAUSSTATTUNG
USE OF A DECORATIVE PANEL BASED ON WOOD, FOR AIRCRAFT INTERIOR DESIGN

(30) Priorité: 04.04.2005 FR 0503324
(43) Date de publication de la demande: 02.01.2008
(73) Titulaire: Skywoods (SARL), 67250 Hoffen (FR)
(72) Inventeur: SEIDENBINDER, Philippe, 67250 Hoffen (FR)
(74) Mandataire: Puiroux, Guy
(86) Numéro de dépôt international: PCT/FR2006/000754
(87) Numéro de publication internationale: WO 2006/106232

(56) Documents cités:
- EP-A- 0 431 574
- DE-A1- 19 829 057
- GB-A- 2 306 389
- GB-A- 2 358 372
- US-A- 3 708 385
- US-A- 5 264 062

## Description

La présente invention concerne l'utilisation d'un nouveau panneau décoratif à base de bois comportant une couche en aluminium pour l'aménagement intérieur de véhicules pour l'aéronautique.

Dans ce dernier domaine, on recourt actuellement pour l'aménagement intérieur des cabines des jets d'affaire ou des avions de ligne commerciaux à des panneaux stratifiés en bois à trois plis ou couches, comportant une couche de placage bois externe, une couche centrale en bois et une couche de contreplacage en bois, également appelée contre-face. L'orientation des fibres du bois de la couche de placage et de la couche de contreplacage est identique et perpendiculaire à celle de la couche médiane.

Ces panneaux décoratifs connus sont utilisés pour l'habillage des meubles tels que des banques ou des bars et pour couvrir les parois murales. Comme tous les matériaux employés à bord de véhicules aéronautiques, ces panneaux décoratifs répondent aux normes très strictes en vigueur et notamment aux normes de tenue au feu et de dégagement de chaleur.

Toutefois, ces panneaux décoratifs connus représentent un certain poids et l'Homme du Métier sait bien que tout gain en ce domaine est important dans l'aéronautique. A cet égard, on pourra se référer au brevet français FR 2.563.153 qui divulgue un panneau composite, notamment destiné au mobilier d'avion, formé d'un panneau du type nid d'abeille recouvert d'un placage de bois.

En outre, ces panneaux décoratifs connus, tout comme celui du brevet FR 2.563.153, ne sont pas suffisamment souples, flexibles, pour être employés tels quels dans toutes les parties des aéroplanes. En effet, lorsque l'on est confronté à des sections à recouvrir présentant des rayons de courbures étroits (inférieurs à 150 mm), ces panneaux connus constitués de trois couches en bois d'épaisseur de 0,6 mm chacune, ne peuvent être employés. La solution actuellement utilisée est une couche de contreplaqué collée sur un intissé en cellulose. Or, ce dernier produit n'est pas agréé vis à vis des normes de tenue au feu ou de dégagement de chaleur.

Par ailleurs, on connaît des panneaux stratifiés associant des couches de bois et d'aluminium. On pourra se référer par exemple, aux brevets anglais GB 2.358.372 et GB 2.306.389, au brevet américain US 3.708.385 ou au brevet allemand DE 198.29.057. Ces brevets décrivent toutefois des panneaux rigides, inadaptés à l'utilisation visée d'habillage de meubles ou de recouvrement de parois non planes.

La présente invention vise donc à proposer un produit de remplacement de ces panneaux décoratifs en stratifié de trois couches en bois qui sont aujourd'hui employés dans l'aéronautique.

Le produit selon l'invention est donc plus léger, conforme aux normes en vigueur - spécialement vis à vis de la tenue au feu - et présente une souplesse, une flexibilité, permettant de l'employer sur la totalité des surfaces à recouvrir.

En outre, le produit selon l'invention présente une planéité optimale, c'est-à-dire qu'il résiste à tout gauchissement lors de la pose et dans le temps.

A cet égard, il est proposé un panneau décoratif stratifié flexible à base de bois comportant au plus trois couches dont une en aluminium, remarquable en ce qu'il comprend au moins deux couches, une couche en bois, dite face de parement, dont l'épaisseur est comprise entre 0,6 et 1 mm et une couche en aluminium constituée par une feuille d'aluminium dont l'épaisseur est comprise entre 60 et 90 microns.

Dans une première variante, ce panneau décoratif est donc un stratifié bicouche, bois/aluminium.

Dans une seconde variante, le panneau décoratif est un stratifié tricouche, comprenant une dernière couche dite contre-face, à base de bois.

De fait, le déposant s'est aperçu, après de nombreux essais sur différentes combinaisons de matériaux et de structures à deux ou trois couches, que de manière fort surprenante, ce produit associant du bois et de l'aluminium remplissait l'ensemble des conditions nécessaires à sa mise en oeuvre dans le domaine de l'aéronautique, avec des performance supérieures à celles des panneaux décoratifs connus.

Ce produit, dans sa version à deux ou trois couches, a passé avec succès les test de conformité aux normes de tenue au feu et la version bicouche répond aux normes de dégagement de chaleur.

Par rapport aux panneaux connus à trois plis en bois, le gain de poids est d'environ 20 à 30 % par mètre carré dans la version trois couches, selon les essences employées, et bien entendu d'au moins 50 % en version deux couches. En outre, la flexibilité du produit facilite son cintrage et autorise son utilisation sur des surfaces avec des rayons de courbure inférieurs à 150 mm, jusqu'à 25 mm sous certaines conditions de préparation, par exemple en mouillant la face de parement et en ponçant la contre-face. Le panneau décoratif selon l'invention permet donc de décorer l'ensemble d'une cabine d'avion avec un produit agréé vis à vis de la tenue au feu.

Par rapport à la version bicouche, la version tricouche présente une planéité meilleure, du fait de sa stratification symétrique ; elle présente donc un plus grand confort d'utilisation. En outre, sa plus grande épaisseur permet de mieux absorber les irrégularités du support de fixation du panneau et ainsi d'obtenir une surface bien lisse, après préparation. Cette même épaisseur autorise de surcroît l'usinage de rainures décoratives sans risque d'atteindre le support de fixation.

On comprend bien que ce panneau décoratif pourra, bien entendu, être utilisé pour toute autre application de panneau décoratif, par exemple pour l'équipement de bateaux, de wagons de chemin de fer ou encore dans les immeubles de grande hauteur, en adaptant les épaisseurs des couches de matériaux au degré de flexibilité souhaité.

En vue d'une utilisation dans l'aéronautique, les deux couches à base de bois du panneau décoratif (la face et la contre-face) ont de préférence une épaisseur de 0,6 mm. Dans le cadre de l'invention, ces deux couches pourront avoir une épaisseur comprise entre 0,6 et 1 mm.

L'épaisseur de la couche centrale en aluminium, constituée par une feuille plane, sera comprise entre 60 et 90 microns. De préférence, on utilisera une feuille d'une épaisseur proche de 70 microns, avec les marges de tolérance appliquées habituellement lors de la fabrication de ces feuilles d'aluminium.

L'assemblage des trois couches entre elles se fait selon des techniques classiques de collage et de pressage à chaud, connues de l'Homme du Métier afin d'obtenir un panneau stratifié. On pourra par exemple utiliser une colle du type phénolique thermodurcissable ou du type polyamide thermoplastique. Les paramètres de pressage (pression, température) à mettre en oeuvre sont aisément déterminables par l'Homme du Métier, en fonction de la colle et de la nature des matériaux employés (essence de bois, fabriquant d'aluminium) ainsi que de la destination du stratifié. En effet, si l'on souhaite incorporer des placages en loupe ou de type marqueterie, pour ne pas abîmer les motifs du bois on effectuera l'assemblage à une pression relativement basse (inférieure à 10 kg/m²) en comparaison à celle appliquée pour des placages standards.

L'Homme du Métier déterminera, pour chaque type d'association colle/bois/aluminium, les paramètres optimaux de pressage permettant la cohésion du stratifié et notamment le maintien de la liaison bois-aluminium lors des déformations subies par le panneau quand on procède à sa pose.

En outre, la face de parement et la contre-face sont de même nature que celles des panneaux décoratifs entièrement en bois, utilisés jusqu'ici. Elles pourront également être traitées avec des solutions ignifugeantes et/ou des vernis retardateurs de flamme, comme cela est habituellement pratiqué. On comprend bien la qualification « à base de bois » du panneau décoratif selon l'invention puisque ce matériau représente plus de la moitié en poids des constituants.

Dans une variante de l'invention, la contre-face est obtenue dans du bois déroulé en lieu et place du traditionnel placage. En effet, lors de l'assemblage du panneau les nervures du placage de la contre-face risquent de ressortir en surimpression sur la face de parement, la feuille médiane d'aluminium n'empêchant pas cette surimpression. L'utilisation du bois déroulé évite ce phénomène. On pourra avantageusement utiliser du bois d'Okoumé à cette fin.

Selon une autre caractéristique de l'invention, on pourra avantageusement augmenter encore la flexibilité du panneau décoratif et ainsi réduire encore la valeur du rayon de courbure limite du produit, en procédant à un défibrage par microfractures du placage en bois, selon les techniques bien connues de l'Homme de l'Art.

## Revendications

1. Utilisation d'un panneau décoratif stratifié flexible à base de bois, comportant au plus trois couches dont une en aluminium pour réaliser des placages de mobilier ou de surfaces pour l'aménagement intérieur d'aéroplanes, ledit panneau comportant au moins deux couches, une couche en bois, dite face de parement, dont l'épaisseur est comprise entre 0,6 mm et 1 mm et une couche en aluminium constituée par une feuille d'aluminium dont l'épaisseur est comprise entre 60 et 90 microns.

2. Utilisation selon la revendication 1 **caractérisée en ce que** le panneau comprend en outre une couche de contre-face en bois dont l'épaisseur est comprise entre 0,6 mm et 1 mm, la feuille en aluminium étant prise entre la face et la contre-face en bois.

3. Utilisation selon l'une quelconque des revendications 1 ou 2 **caractérisée en ce que** chaque couche de bois a une épaisseur de 0,6 mm et la feuille d'aluminium a une épaisseur de 70 microns.

4. Utilisation selon la revendication 2, **caractérisée en ce que** la contre-face est en bois déroulé.

5. Utilisation selon l'une quelconque des revendications précédentes **caractérisée en ce que** le panneau décoratif est obtenu par collage sous pression et à chaud.

6. Utilisation selon la revendication 5 **caractérisée en ce que** la colle d'assemblage est de type phénolique thermodurcissable.

7. Utilisation selon la revendication 5 **caractérisé en ce que** la colle d'assemblage est de type polyamide thermoplastique.

## Claims

1. Use of a flexible laminated decorative panel based on wood, comprising a maximum of three layers of which one in aluminium in order to carry out veneering of furniture or of surfaces for the interior design of aircraft, said panel comprising at least two layers, a wooden layer, called the face of wood siding, of which the thickness is between 0.6 mm and 1 mm and an aluminium layer consisting of an annealed foil of which the thickness is between 60 and 90 microns.

2. Use according to claim 1 **characterised in that** the panel further comprises a layer of wooden backing of which the thickness is between 0.6 mm and 1 mm, with the annealed foil sandwiched between the wooden face and the wooden backing.

3. Use according to any of claims 1 or 2 **characterised in that** each wooden layer has a thickness of 0.6 mm and the annealed foil has a thickness of 70 microns.

4. Use according to claim 2, **characterised in that** the backing is made of plywood veneer.

5. Use according to any of the preceding claims **characterised in that** the decorative panel is obtained via hot gluing under pressure.

6. Use according to claim 5 **characterised in that** the assembly adhesive is of the thermosetting phenolic type.

7. Use according to claim 5 **characterised in that** the assembly adhesive is of the thermoplastic polyamide type.

## Patentansprüche

1. Verwendung einer biegsamen Schichtstoff-Zierplatte auf Holzbasis, umfassend höchstens drei Schichten, davon eine aus Aluminium, um Möbel- oder Oberflächenverkleidungen zur Inneneinrichtung von Flugzeugen herzustellen, wobei die Platte mindestens zwei Schichten umfasst, eine Holzschicht, die so genannte Deckseite, deren Dicke zwischen 0,6 mm und 1 mm liegt, und eine Aluminiumschicht, die aus einer Aluminiumfolie besteht, deren Dicke zwischen 60 und 90 Mikrometern liegt.

2. Verwendung nach Anspruch 1, **dadurch gekennzeichnet, dass** die Platte ferner eine Rückseite aus Holz umfasst, deren Dicke zwischen 0,6 mm und 1 mm liegt, wobei die Aluminiumfolie zwischen der Vorderseite und der Rückseite aus Holz gehalten ist.

3. Verwendung nach einem der Ansprüche 1 oder 2, **dadurch gekennzeichnet, dass** jede Holzschicht eine Dicke von 0,6 mm aufweist und die Aluminiumschicht eine Dicke von 70 Mikrometern aufweist.

4. Verwendung nach Anspruch 2, **dadurch gekennzeichnet, dass** die Rückseite aus Schälholz besteht.

5. Verwendung nach einem der vorhergehenden Ansprüche, **dadurch gekennzeichnet, dass** die Zierplatte durch Heißverleimen unter Druck erzielt wird.

6. Verwendung nach Anspruch 5, **dadurch gekennzeichnet, dass** der Montageleim von der Art eines wärmehärtenden Phenolklebers ist.

7. Verwendung nach Anspruch 5, **dadurch gekennzeichnet, dass** der Montageleim von der Art eines thermoplastischen Polyamidklebers ist.
